Europäisches Patentamt

**European Patent Office**

Office européen des brevets

(19)

(11) Veröffentlichungsnummer : **0 225 605**
**B1**

(12) # EUROPÄISCHE PATENTSCHRIFT

(45) Veröffentlichungstag der Patentschrift :
20.09.89

(21) Anmeldenummer : 86116821.9

(22) Anmeldetag : 03.12.86

(51) Int. Cl.⁴ : **B 01 D 53/04**

(54) Druckwechseladsorptionsverfahren.

(30) Priorität : 09.12.85 DE 3543468

(43) Veröffentlichungstag der Anmeldung :
16.06.87 Patentblatt 87/25

(45) Bekanntmachung des Hinweises auf die Patenterteilung : 20.09.89 Patentblatt 89/38

(84) Benannte Vertragsstaaten :
AT BE DE FR GB IT NL

(56) Entgegenhaltungen :
EP-A- 0 008 882
EP-A- 0 066 869
FR-A- 2 313 313

(73) Patentinhaber : Linde Aktiengesellschaft
Abraham-Lincoln-Strasse 21
D-6200 Wiesbaden (DE)

(72) Erfinder : Benkmann, Christian, Dipl.-Ing.
Meisenstrasse 39
D-8032 Gräfelfing (DE)

(74) Vertreter : Schaefer, Gerhard, Dr.
Linde Aktiengesellschaft Zentrale Patentabteilung
D-8023 Höllriegelskreuth (DE)

## Beschreibung

Die Erfindung betrifft ein Druckwechseladsorptionsverfahren zum selektiven Adsorbieren mindestens einer Gaskomponente aus einem Einsatzgasgemisch, bei dem das Gasgemisch im zyklischen Wechsel durch mindestens drei Adsorber geführt wird, die gegeneinander versetzt Schaltzyklen durchlaufen, bei denen Einsatzgasgemisch während einer Adsorptionsphase bei erhöhtem Druck in einen Adsorber eingeleitet und nicht adsorbiertes Gas aus dem Adsorber abgezogen wird, nach Beendigung einer Adsorptionsphase eine partielle Entspannung im Gleichstrom erfolgt und dabei anfallendes Gleichstromentspannungsgas mindestens teilweise anderen Adsorbern zum partiellen Wiederaufdrücken zugeführt wird, nach Beendigung der Gleichstromentspannung eine Gegenstromentspannung und beim niedrigsten Verfahrensdruck gegebenenfalls eine Spülung mit einem Spülgas erfolgt und der Adsorber anschließend wieder auf den Adsorptionsdruck aufgedrückt wird.

Bei üblichen Druckwechseladsorptionsverfahren (nachfolgend auch kurz PSA-Verfahren genannt) folgt im Anschluß an eine Adsorptionsphase in der Regel ein mehrstufiges Gleichstromspannen, wobei das dabei anfallende Gleichstromspannungsgas in einen oder mehrere regenerierte, wiederaufzudrückende Adsorber geleitet und dort zum Druckaufbau durch Druckausgleich verwendet wird. Im Anschluß an einen oder mehrere derartige Druckausgleiche wird Gas aus einer weiteren Gleichstromspannungsphase verwendet, um einen weiteren Adsorber bei niedrigstem Verfahrensdruck zu spülen. Bis zu welchem Druckniveau eine Gleichstromspannung eines beladenen Adsorbers sinnvoll ist, hängt von der Konzentration der adsorbierten Komponenten, vom Adsorptionsdruck und von der Größe der Adsorbensreserve ab, die für das Vorrücken der Adsorptionsfront bei der Gleichstromspannung im Adsorber vorgesehen ist.

Um hohe Produktausbeuten zu erreichen, wird bei einem aus der US-PS 3 986 849 bekannten PSA-Verfahren angestrebt, die Gleichstromspannung bis zu einem möglichst tiefen Druckniveau durchzuführen, um viel von der im Gasraum des Adsorbers enthaltenen Produktkomponente zurückzugewinnen. Das führt bei diesem Verfahren zu wesentlich größeren Adsorbern, als es für die eigentliche Adsorptionsphase nötig ist. Um diesen Nachteil zu vermeiden, wird in einem aus der DE-PS 33 04 227 bekannten PSA-Verfahren die Gleichstromspannung bei einem höheren Druck beendet und ein Teil des bei der nachfolgenden Gegenstromspannung anfallenden Gases in Hilfsadsorbern nachgereinigt und den Hauptadsorbern dann als Spülgas wieder zugeführt. Dies bedeutet, daß Verunreinigungen, die im Hauptadsorber adsorbiert waren, im Hilfsadsorber ein zweites Mal adsorbiert werden müssen und dadurch immer noch einen hohen Bedarf an Adsorptionsmittel bedingen.

Der Erfindung liegt die Aufgabe zugrunde, ein Verfahren der eingangs genannten Art so auszugestalten, daß das Adsorptionsmittel in besonders günstiger Weise genutzt wird. Obwohl das Verfahren allgemein anwendbar sein soll, soll es speziell auch für hohe Adsorptionsdrücke und bei Vorliegen von adsorbierbaren Komponenten in hoher Konzentration besonders geeignet sein.

Diese Aufgaben werden bei einem Verfahren der eingangs genannten Art dadurch gelöst, daß das Einsatzgasgemisch während einer Adsorptionsphase durch jeweils zwei hintereinander geschaltete Teiladsorber geleitet wird, daß nach Beendigung mindestens einer Gleichstromentspannungsphase die Teiladsorber voneinander getrennt und der erste, vom Einsatzgasgemisch zuerst durchströmte Teiladsorber weiter entspannt wird, während der zweite Teiladsorber auf einem höheren Druck gehalten wird, danach der zweite Teiladsorber im Gegenstrom entspannt und dabei abgezogenes Gegenstromentspannungsgas zur Spülung des ersten Teiladsorbers verwendet wird.

Das wesentliche Merkmal des erfindungsgemäßen Verfahrens liegt in der Unterteilung eines bisher üblichen einzelnen Adsorbers in zwei hintereinander geschaltete Teiladsorber. Während die beiden Teiladsorber während einer Adsorptionsphase und einer nachfolgenden Gleichstromentspannungsphase in Reihe geschaltet bleiben und genauso wirken wie ein einziger entsprechend größerer Adsorber, lassen sich durch die Aufteilung bei der nachfolgenden Regenerierung erhebliche Vorteile erzielen. Der erste Teiladsorber, der im Fall der Adsorption von nur einer Komponente stärker als der zweite Teiladsorber beladen ist und im Falle der Adsorption verschiedener Komponenten mit der stärker adsorbierbaren Komponente beladen ist (der Begriff « Komponente » kann sich hier und nachfolgend jeweils auf eine einzelne Komponente oder auf Gruppen von verschiedenen Bestandteilen beziehen), kann durch die nachfolgende Entspannung schon von einem Teil der adsorbierten Komponenten befreit werden, und in der nachfolgenden Spülphase findet eine weitergehende Desorption unter Verwendung eines durch den zweiten Teiladsorber bereitgestellten Spülgases statt. Durch diese Verfahrensschritte ist schon eine weitgehende Regenerierung der Teiladsorber möglich, ohne daß hierzu Entspannungsgas aus einem anderen, eine Gleichstromentspannungsphase durchlaufenden Adsorber oder Produktgas erforderlich wäre. Dies hat zur Folge, daß weniger nicht adsorbierbare Komponente als Spülgas durch den Adsorber geführt werden und führt somit unmittelbar zu einer entsprechenden Ausbeuteverbesserung für die nicht adsorbierte Komponente. Sofern eine Verbesserung der Ausbeute nicht angestrebt wird, kann das Adsorptionsverfahren in einer entsprechend verkleinerten PSA-Anlage durchgeführt werden.

Die weitere Entspannung des ersten Teiladsorbers nach seiner Trennung vom zweiten Teiladsorber erfolgt in vorteilhafter Weise mindestens teilweise im Gegenstrom zur Strömungsrichtung während einer Adsorptionsphase. Während in Abhängigkeit vom Beladungszustand eines ersten Teiladsorbers nach Beendigung der Gleichstromentspannung gegebenenfalls zunächst noch eine Gleichstromentspannung möglich ist und dabei anfallendes Gas einem anderen, eine Druckaufbauphase bei geeignetem Druckniveau durchlaufenden Adsorber zugeführt werden kann, ist es bei weitgehend vollständiger Beladung des ersten Teiladsorbers im allgemeinen zweckmäßiger, sofort eine Gegenstromentspannungsphase bis auf den niedrigsten Verfahrensdruck vorzunehmen. Auch bei einer zuvor erfolgten Gleichstromentspannungsphase ist es in der Regel zweckmäßig, die abschließende Absenkung auf den niedrigsten Verfahrensdruck im Gegenstrom vorzunehmen.

Der zweite Teiladsorber kann während der weiteren Entspannung des ersten Teiladsorbers beliebige Verfahrensschritte durchführen, sofern dabei der Druck des zweiten Teiladsorbers im wesentlichen unverändert bleibt. In einer bevorzugten Ausgestaltung der Erfindung wird der zweite Teiladsorber während dieser Phase jedoch einfach auf dem Enddruck der gemeinsamen Gleichstromentspannung gehalten.

Um zu verhindern, daß infolge des anfänglich großen Druckgefälles zwischen dem weiter entspannten ersten Teiladsorber und dem im Gegenstrom zu entspannenden zweiten Teiladsorber zu Beginn der Spülung des ersten Teiladsorbers ein ungünstiger Druckstoß erfolgt und eine stark ungleichförmige Restgasmenge aus dem ersten Teiladsorber abströmt, wird in vorteilhafter Weiterbildung der Erfindung das Gegenstromentspannungsgas aus dem zweiten Teiladsorbers mittels eines Regelventils auf den Druck des ersten Teiladsorbers entspannt, bevor es als Spülgas in den ersten Teiladsorber geleitet wird. Die Stellung des Regelventils kann dabei in günstiger Weise durch ein Programmsteuerwerk überwacht werden, wobei während der Gegenstromentspannungsphase eines zweiten Teiladsorbers der Druck des zweiten Teiladsorbers laufend gemessen und mit einem vorgegebenen Solldruck verglichen wird. Danach kann über das Programmsteuerwerk die Öffnung des Regelventils eingestellt werden.

Das erfindungsgemäße Verfahren eignet sich für die Zerlegung von Gasgemisch in einem weiten Druckbereich und ist insbesondere für Einsatzgasgemische, die bei einem relativ hohen Druck vorliegen, besonders geeignet. Während übliche Adsorptionsverfahren, wie sie beispielsweise in der US-PS 3 986 849 beschrieben sind, im allgemeinen nicht bei Adsorptionsdrücken über 30 bar eingesetzt werden, eignet sich das erfindungsgemäße PSA-Verfahren für eine Adsorption im Druckbereich zwischen 10 und 100 bar, vorzugsweise zwischen 20 und 100 bar und insbesondere bei Drücken über 30 bar, beispielsweise zwischen 30 und 90 bar. Besonders vorteilhaft ist das erfindungsgemäße Verfahren darüber hinaus, wenn das Einsatzgasgemisch einen relativ hohen Anteil adsorbierbarer Komponenten enthält, beispielsweise mindestens 30 Mol-% adsorbierbare Komponenten. Das Produktgas kann dabei entweder eine im wesentlichen von adsorbierbaren Komponenten freie Fraktion sein oder ein Gasstrom, der lediglich an adsorbierbaren Komponenten abgereichert ist.

Die gemeinsame Gleichstromentspannung beider zusammengeschalteter Teiladsorber kann zweckmäßig soweit durchgeführt werden, bis der Partialdruck der adsorbierbaren Komponente erreicht oder sogar unterschritten wird. Ist die Gewinnung einer nicht adsorbierbaren Komponente in lediglich angereicherter Form angestrebt, ist es günstig, die gemeinsame Gleichstromentspannung bis zu einem Druck durchzuführen, der dem 0,5- bis 1,0-fachen, vorzugsweise dem 0,7- bis 0,8-fachen des Partialdruckes der adsorbierbaren Komponente entspricht. Bei einer weiteren Fortführung der Gleichstromentspannung besteht die Gefahr, daß wieder desorbierende Anteile in zu großem Umfang mit dem Gleichstromentspannungsgas aus dem Austrittsende des Adsorbers abgezogen werden, wodurch die gewünschte Produktreinheit in einer nachfolgenden Adsorptionsphase nicht gewährleistet ist. Bei einem höheren Enddruck der Gleichstromentspannung bleiben dagegen noch erhebliche Mengen von nicht adsorbierbarer Komponente im Lückenvolumen des Adsorbers eingeschlossen, die dann bei einer nachfolgenden Gegenstromentspannung verloren gehen und somit zu einer Ausbeuteverminderung führen.

In einer günstigen Weiterbildung des erfindungsgemäßen Verfahrens wird der zweite Teiladsorber nur durch Entspannung regeneriert, ohne daß er eine Spülphase durchläuft. Diese Verfahrensführung ist dann zweckmäßig, wenn der Partialdruck der im zweiten Teiladsorber adsorbierten Komponente mindestens doppelt so hoch ist wie der tiefste Entspannungsdruck. Unter diesen Voraussetzungen liegen so hohe Druckdifferenzen zwischen dem Partialdruck der adsorbierten Komponente und dem Entspannungsdruck vor, daß eine ausreichende Desorption in vielen Fällen gewährleistet ist. Diese Verfahrensführung eignet sich insbesondere dann, wenn die nicht adsorbierte Komponente in angereicherter Form, nicht jedoch in reiner Form gewonnen werden soll.

Ein besonders günstiger Einsatzfall für das erfindungsgemäße PSA-Verfahren liegt vor, wenn das Einsatzgasgemisch mindestens drei unterschiedlich stark adsorbierbare Komponenten enthält und die Teiladsorber so aufgeteilt sind, daß am Ende einer Adsorptionsphase im ersten Teiladsorber im wesentlichen nur die am stärksten adsorbierbare Komponente und im zweiten Teiladsorber im wesentlichen nur die schwächer adsorbierbare Komponente adsorbiert ist, während die am schwächsten adsorbierbare Komponente bzw. die nicht adsorbierbare Komponente in reiner oder angereicherter Form aus dem zweiten Teiladsorber abgezogen wird.

Die Anwendung des erfindungsgemäßen Verfahrens bei einer solchen Gaszerlegung ist besonders vorteilhaft, da das Gegenstromentspannungsgas des zweiten Teiladsorbers, das den ersten Teiladsorber spült, dann im wesentlichen frei von Komponenten ist, die im ersten Teiladsorber adsorbiert sind. Dieses Gegenstromentspannungsgas ist daher besonders geeignet als Spülgas für den ersten Teiladsorber.

Bei der Zerlegung eines derartigen Drei- oder Mehrkomponenteneinsatzgasgemisches liegt am Ende einer Adsorptionsphase für den ersten Teiladsorber ein Zustand vor, der im wesentlichen dem herkömmlichen Beladungszustand eines einzigen Adsorbers bei Abtrennung einer Komponente entspricht. Nach Beendigung der gemeinsamen Gleichstromspannung beider Teiladsorbers kann es daher in vielen Fällen auch günstig sein, die separate weitere Entspannung des ersten Teiladsorbers zunächst im Gleichstrom durchzuführen und dabei gewonnenes Gleichstromentspannungsgas einem anderen ersten Teiladsorber zum Wiederaufdrücken im Druckausgleich zuzuführen. Dies führt zu einer weiteren Erhöhung der Ausbeute, da die im ersten Teiladsorber nicht adsorbierbaren Komponenten in diesem Fall nicht mit dem Gegenstromentspannungsgas als Restgas anfallen und abgeführt werden, sondern in sinnvoller Weise wieder für einen Druckaufbau eines anderen ersten Teiladsorbers eingesetzt werden.

Ebenso wie beim Zerlegen eines im wesentlichen aus zwei Komponenten bestehenden Einsatzgasgemisches ist es auch bei der Zerlegung von Drei- oder Mehrkomponenteneinsatzgasgemischen zweckmäßig, die gemeinsame Gleichstromspannung beider Teiladsorber bis zu einem Druck durchzuführen, der dem 0,5- bis 1,0-fachen, vorzugsweise dem 0,7- bis 0,8-fachen des Partialdruckes der adsorbierbaren Komponenten entspricht. In diesem Fall ist jedoch zu beachten, daß dabei der Partialdruck derjenigen adsorbierbaren Komponente gewählt wird, die in höherer Konzentration im Einsatzgasgemisch vorliegt, da diese Bedingung für beide Teiladsorber eingehalten werden soll.

Sofern vor dem gemeinsamen Wiederaufdrücken der beiden miteinander verbundenen Teiladsorber ein Druckausgleich zwischen ersten Teiladsorbern erfolgt, liegt vor Einleitung des gemeinsamen Druckaufbaus ein unterschiedliches Druckniveau in den beiden Teiladsorbern vor. Falls in einem solchen Fall der weitere Druckaufbau dadurch eingeleitet wird, daß das Verbindungsventil zwischen den Teiladsorbern einfach geöffnet wird, kann es zu unerwünschten Druckstößen kommen. Es ist deshalb in weiterer Ausbildung der Erfindung in einem solchen Fall vorgesehen, daß ein Druckausgleich mit einem eine Gleichstromentspannungsphase durchlaufenden anderen, miteinander verbundenen ersten und zweiten Teiladsorberpaar dadurch eingeleitet wird, daß das Gleichstromentspannungsgas zunächst nur dem zweiten Teiladsorber zugeführt wird, bis dessen Druck im wesentlichen dem Druck des ersten Teiladsorbers entspricht, den dieser nach dem Druckausgleich mit einem anderen ersten Teiladsorber erreicht hat, und daß danach beide Teiladsorber miteinander verbunden und gemeinsam weiter aufgedrückt werden. Eine solche Verfahrensführung läßt sich in einfacher Weise dadurch realisieren, daß in jedem Teiladsorber eine Druckmessung erfolgt, die mit einer Programmsteuerung verbunden ist und daß das Verbindungsventil zwischen den beiden Adsorbern dann geöffnet wird, wenn die Drücke in den beiden Teiladsorbern im wesentlichen gleich sind oder eine vorgegebene Minimaldifferenz unterschreiten. Eine dafür erforderliche, beispielsweise elektrisch oder pneumatisch arbeitende Programmsteuerung ist für den Betrieb einer PSA-Anlage ohnehin erforderlich und kann in der Regel ohne großen Aufwand in der genannten Weise weiter ausgebildet werden.

In einer anderen Ausführungsform der Erfindung kann die Druckdifferenz zwischen einem ersten und einem zweiten Teiladsorber, die durch die Gleichstromentspannung eines ersten Teiladsorbers im Druckausgleich mit einem anderen ersten Teiladsorber entsteht, von Anfang an dadurch vermieden werden, daß ein Teil dieses Gleichstromentspannungsgases nicht nur einem ersten, sondern auch dem dazugehörigen zweiten Teiladsorber zum Wiederaufdrücken zugeführt wird. Ob die Einleitung eines derartigen Gleichstromentspannungsgases in einen zweiten Teiladsorber günstig ist oder nicht, hängt im Einzelfall von der Art zu zerlegenden Gase und der gewünschten Reinheit der Verfahrensprodukte ab.

Während der gemeinsamen Gleichstromentspannungsphase der hintereinander geschalteten Teiladsorber ist es in weiterer Ausgestaltung der Erfindung auch möglich, die Gleichstromentspannung dadurch zu unterteilen, das Gleichstromentspannungsgas aus dem Austrittsende der einzelnen Teiladsorber abzuziehen und den jeweils zugehörigen aufzudrückenden Teiladsorbern zuzuleiten. Hierbei kann die Verbindung zwischen den beiden Teiladsorbern jeweils aufrechterhalten werden oder auch schon unterbrochen sein.

Das erfindungsgemäße Verfahren läßt sich bei einer Vielzahl von Gastrennungen einsetzen. Es eignet sich beispielsweise für die Gewinnung eines Ammoniaksynthesegases aus Rohgasen mit einem zu hohen Stickstoffgehalt und gegebenenfalls anderen Komponenten wie beispielsweise Kohlendioxid. So läßt sich beispielsweise aus einem Rohgas mit 35 % Stickstoff, 15 % Kohlendioxid und 50 % Wasserstoff durch das erfindungsgemäße Verfahren ein Ammoniaksynthesegas mit dem für die Ammoniaksynthese erforderlichen stöchiometrischen Verhältnis von 75 % Wasserstoff und 25 % Stickstoff herstellen. Dabei wird Kohlendioxid im ersten Teiladsorber und ein Teil des Stickstoffs im zweiten Teiladsorber adsorbiert. Während einer Adsorptionsphase wird aus dem zweiten Teiladsorber ein wasserstoffreicher Strom abgezogen, der fortschreitend mehr Stickstoff enthält. Das nicht adsorbierte Gas wird in einem solchen Fall in einem Zwischenbehälter gespeichert, wodurch sich die Konzentrationsschwankungen ausgleichen und im Mittel ein Ammoniaksynthesegas mit der erforderlichen Zusammensetzung gewonnen wird. In ähnlicher Weise kann aus einem Gasgemisch, das im wesentlichen Wasserstoff und Kohlenmonoxid und gegebenenfalls weitere Komponenten enthält, ein Synthesegas für verschiedene Synthesen erzeugt werden, beispielsweise für die Methanolsynthese oder die Oxosynthese.

Eine weitere Anwendungsmöglichkeit ist die Zerlegung von Koksgas, das beispielsweise 55 bis 60 % Wasserstoff enthält und in einer typischen Zusammensetzung etwa 25 % Methan, je 5 % Stickstoff und Kohlenmonoxid als relativ schlecht adsorbierbare Komponenten und etwa 5 % Kohlendioxid und $C_{2+}$-Kohlenwasserstoffe als relativ gut adsorbierbare Komponenten enthält. In einem solchen Fall würden Kohlendioxid und die $C_{2+}$-Kohlenwasserstoffe im ersten Teiladsorber adsorbiert und Methan, Stickstoff sowie Kohlenmonoxid im zweiten Teiladsorber. Das Spülgas für den ersten Teiladsorber enthält in einem solchen Anwendungsfall im wesentlichen den im zweiten Teiladsorber zurückgehaltenen Anteil schlechter adsorbierbarer Komponenten, also Methan, Stickstoff und Kohlenmonoxid und daneben noch einen Teil des bei der Gegenstromentspannung des zweiten Teiladsorbers noch aus diesem austretenden Wasserstoff.

Bei Anwendung des erfindungsgemäßen Verfahrens ergeben sich im Vergleich zu üblichen PSA-Verfahren verkürzte Zykluszeiten, weil für die Spülung eines Adsorbers nicht auf einen anderen, Gleichstromentspannungsgas liefernden Adsorber zurückgegriffen werden muß, sondern im Gegensatz dazu das Entspannungsgas aus dem zweiten Teiladsorber selbst geliefert wird. Dies hat unter anderem zur Folge, daß bei Verwendung einer gleichbleibenden Zahl von Adsorbern eine Druckausgleichsphase mehr vorgenommen werden kann als beim üblichen Verfahren. Dies bedeutet unter anderem, daß auch schon bei einer Drei-Adsorberanlage ein Druckausgleich möglich ist, ohne daß der kontinuierliche Betrieb der Anlage unterbrochen werden müßte.

Eine Vorrichtung zur Durchführung des erfindungsgemäßen Verfahrens enthält mindestens drei Adsorber, die jeweils mittels Ventilen an einer Einsatzgaszuführungsleitung, einer Abzugsleitung für nicht adsorbiertes Gas, einer Restgasleitung und mindestens einer Druckausgleichsleitung angeschlossen sind und ein Programmsteuerwerk für die Schaltung der Ventile und ist dadurch gekennzeichnet, daß jeder Adsorber in zwei hintereinander geschaltete Teiladsorber unterteilt ist und zwischen den beiden Teiladsorbern ein Regelventil angeordnet ist, dessen Stellung vom Programmsteuerwerk in Abhängigkeit vom Signal eines dem zweiten Teiladsorber zugeordneten Drucktransmitters gesteuert wird. Mittels dieses Drucktransmitters kann das Steuerventil so eingestellt werden, daß das aus dem zweiten Teiladsorber austretende Spülgas für den ersten Teiladsorber in der jeweils gewünschten Weise abgegeben wird. In günstiger Weiterbildung der Vorrichtung enthält jeder Teiladsorber einen Drucktransmitter, da dann auch bei einem Druckausgleich zwischen ersten Teiladsorbern die Druckdifferenz zwischen den beiden Teiladsorbern während einer Aufdrückphase gemessen und damit die Öffnung des Verbindungsventils gesteuert werden kann.

Weitere Einzelheiten der Erfindung werden nachfolgend anhand zweier in den Figuren schematisch dargestellter Ausführungsbeispiels dargestellt.

Es zeigen :

Figur 1 ein erstes Ausführungsbeispiel mit drei Adsorbern,

Figur 2 ein für den Betrieb der in Figur 1 dargestellten Adsorptionsanlage geeignetes Taktschema,

Figur 3 den Druckverlauf eines Adsorbers aus der Anlage gemäß Figur 1 während eines Schaltzyklus bei Betrieb gemäß dem Taktschema aus Figur 2,

Figur 4 ein weiteres Ausführungsbeispiel mit sechs Adsorbern,

Figur 5 ein für den Betrieb der in Figur 4 dargestellten Adsorptionsanlage geeignetes Taktschema und

Figur 6 den Druckverlauf eines Adsorbers aus der Anlage gemäß Figur 4 während eines Schaltzyklus bei Betrieb gemäß dem Taktschema aus Figur 5.

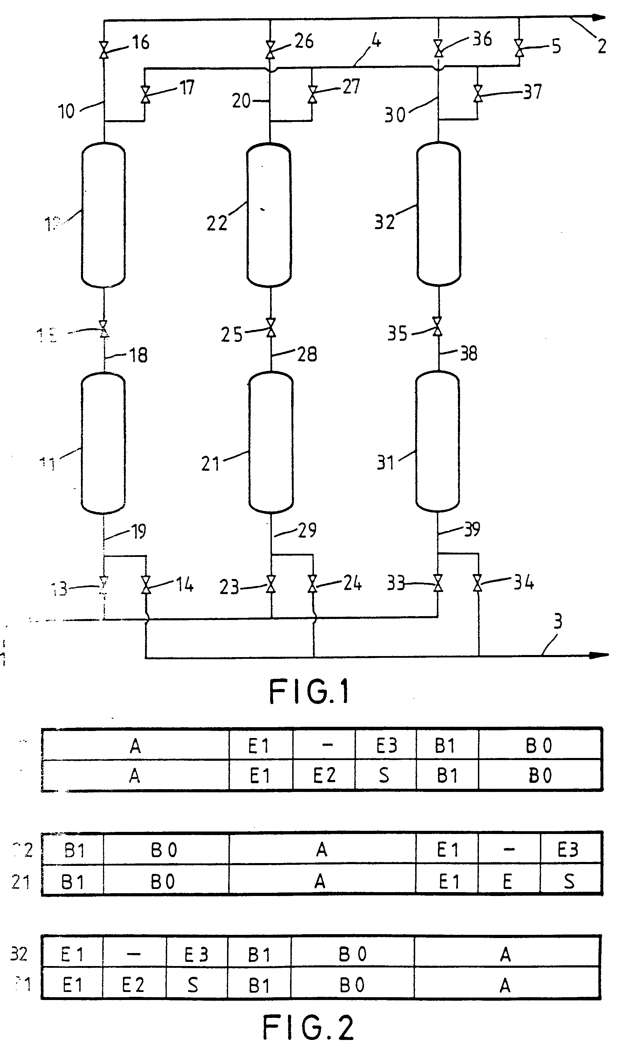

Bei der in Figur 1 dargestellten PSA-Anlage kommen drei Adsorber zum Einsatz, die in jeweils einen ersten Teiladsorber 11, 21, 31 und einen jeweils nachgeschalteten zweiten Teiladsorber 12, 22, 32 unterteilt sind. Das Austrittsende der ersten Teiladsorber ist jeweils durch eine mit Ventilen 15, 25, 35 versehene Leitung 18, 28, bzw. 38 mit dem Eintrittsende des zweiten Teiladsorbers verbunden. Das Eintrittsende der ersten Teiladsorber 11, 21, 31 ist über mit Ventilen 13, 23, 33 versehene Leitungen 19, 29 bzw. 39 mit einer Einsatzgasgemisch-Zuführungsleitung 1 verbunden. Das Austrittsende der zweiten Teiladsorber 12, 22, 32 ist über mit Ventilen 16, 26 bzw. 36 versehene Leitungen 10, 20, 30 mit einer Produktgasabzugsleitung 2 verbunden. Weiterhin ist das Eintrittsende eines jeden ersten Teiladsorbers über ein Ventil 14, 24 bzw. 34 mit einer Restgasleitung 3 verbunden, ferner das Austrittsende eines jeden zweiten Teiladsorbers über ein Ventil 17, 27 bzw. 37 mit einer Leitung 4, die einerseits zum Druckausgleich zwischen zwei Adsorbern und andererseits zum Druckaufbau mit Produktgas genutzt wird, wozu die Leitung 4 über ein Ventil 5 mit der Produktgasleitung 2 verbunden ist.

Der Betrieb der in Figur 1 dargestellten PSA-Anlage läßt sich am einfachsten anhand des in Figur 2 dargestellten Taktschemas beschreiben. Der aus den Teiladsorbern 11 und 12 bestehende Adsorber wird während einer Adsorptionsphase A vom Einsatzgasgemisch über Leitung 1 und das geöffnete Ventil 13 versorgt. Das aus dem Teilad-

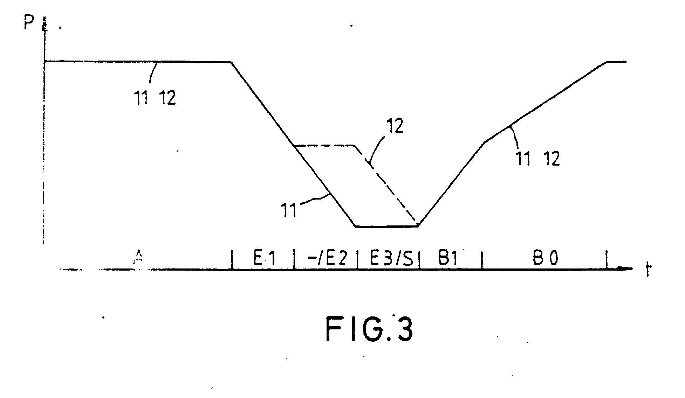

sorber 11 austretende Gas gelangt über Leitung 18 und das geöffnete Ventil 15 in den zweiten Teiladsorber. Gereinigtes bzw. angereichertes Gas tritt über Leitung 10 aus dem zweiten Teiladsorber aus und gelangt über das geöffnete Ventil 16 in die Produktgasleitung 2. Wie aus Figur 3 ersichtlich, ist während der Adsorptionsphase A der Druck in beiden Teiladsorbern 11 und 12 gleich und im wesentlichen zeitlich konstant. Im Anschluß an eine Adsorptionsphase folgt eine gemeinsame Gleichstromentspannungsphase E1 der beiden noch hintereinander geschalteten Teiladsorber 11 und 12. Während dieser Betriebsphase werden die Ventile 13 und 16 geschlossen, während Ventile 23 und 26 öffnen und damit eine Adsorptionsphase in den Teiladsorbern 21, 22 einleiten. Bei weiter geöffentem Ventil 15 wird das Ventil 17 geöffnet, wodurch Gleichstromentspannungsgas über Leitung 4 abgezogen wird und über das geöffnete Ventil 37 und Leitung 30 in den zweiten Teiladsorber 32 des dritten Adsorberpaares eingeleitet wird. Durch das geöffnete Ventil 35 gelangt dieses Gleichstromentspannungsgas ebenfalls in den ersten Teiladsorber 31, so daß auch hier der Druck aufgebaut wird. Nach Beendigung der Druckausgleichsphase werden die Ventile 15 und 17 des ersten Adsorberpaares geschlossen und das Ventil 14 am Eintrittsende des ersten Teiladsorbers 11 geöffnet. Hierdurch wird die Gegenstromentspannungsphase E2 des ersten Teiladsorbers eingeleitet, während der zweite Teiladsorber 12 auf dem Druckniveau verweilt, das am Ende der Gleichstromentspannungsphase E1 erreicht wurde. Während der Gegenstromentspannungsphase E2 wird Restgas über Leitung 3 abgezogen und eine Teildesorption des beladenen Adsorbers 11 durchgeführt. Bei Erreichen des niedrigsten Verfahrensdrucks wird die Gegenstromentspannungsphase beendet und das Ventil 15 langsam zum ·geregelten Druckabbau des zweiten Teiladsorbers 12 geöffnet. Die Öffnung des Ventils wird dadurch über einen in der Figur 1 nicht dargestellten, dem Teiladsorber 12 zugeordneten Drucktransmitter geregelt. Nach Beendigung der Gegenstromentspannungsphase E3 des zweiten Teiladsorbers 12 bzw. der dazugehörigen Spülgase S des ersten Teiladsorbers 11 liegen beide Teiladsorber im wesentlichen beim gleichen, niedrigsten Verfahrensdruck vor und sind im allgemeinen hinreichend regeneriert. Sollte dies aufgrund einer speziellen Aufgabenstellung einmal nicht der Fall sein, kann gegebenenfalls noch eine zusätzliche Spülung mit einem geeigneten Spülgas, das beide Teiladsorber durchströmt, folgen. Zur Vorbereitung auf eine neue Adsorptionsphase A müssen daher die Teiladsorber 11 und 12 erneut unter Druck gesetzt werden. Dies erfolgt zunächst durch Druckausgleich mit dem Adsorberpaar 21, 22, das nach Beendigung der Phasen E3 bzw. S in den Teiladsorbern 11, 12 seine Adsorptionsphase A beendet hat und seinerseits eine Gleichstromentspannungsphase E1 durchläuft. Während dieser Phase werden die Ventile 17 und 27 geöffnet, so daß Gleichstromentspannungsgas aus den Teiladsorbern 21, 22 über Leitung 4 in das Austrittsende des Teiladsorbers 12 und über das geöffnete Ventil auch in den Teiladsorber 11 einströmt. Nach Beendigung des Druckausgleichs erfolgt eine weitere Phase des Druckaufbaues B0, während der die Teiladsorber 11 und 12 mit Produktgas, das über das nunmehr geöffnete Ventil 5, über Leitung 4 und das geöffnete Ventil 17 in das Austrittsende des Teiladsorbers 12 und danach über das weiterhin geöffnete Ventil 15 in den Teiladsorber 11 einströmt. Nach Erreichen des Adsorptionsdruckes in den Teiladsorbern 11 und 12 ist ein Arbeitszyklus geschlossen und es kann erneut Einsatzgasgemisch über das dann zu öffnende Ventil 13 in das Adsorberpaar eingeleitet werden. Statt des Druckaufbaus mit Produktgas während der Phase B0 ist es in vielen Fällen auch möglich, für diese Phase Rohgas zu verwenden, d. h. einen Teil des über Leitung 1 herangeführten Gasgemisches über das dann schon zu öffnende Ventil 13 in die Adsorber 11 12 einzuführen, während Ventil 16 noch geschlossen ist.

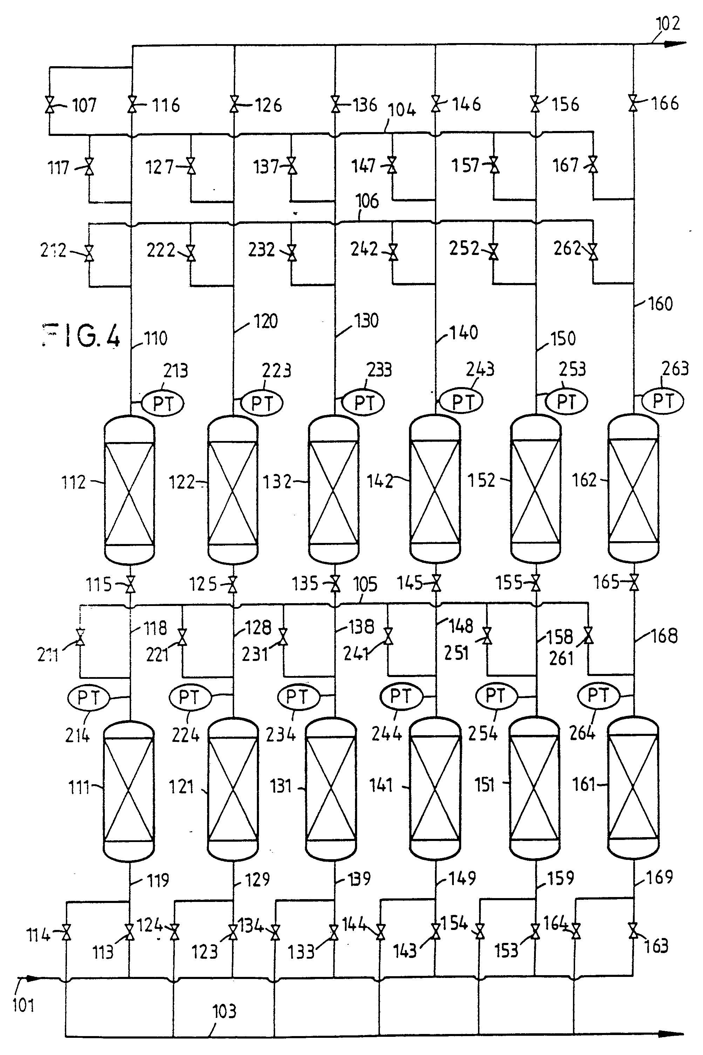

In der Figur 4 ist eine PSA-Anlage mit sechs Adsorbern dargestellt, die im Prinzip wie die in Figur 1 dargestellte Anlage mit drei Adsorbern aufgebaut ist. Die Bezeichnung der Leitungen, Ventile und Teiladsorber ist daher in Anlehnung an die in Figur 1 gewählte Bezeichnung fortgeführt worden, wobei lediglich zur Unterscheidung eine dritte Ziffer vorangestellt wurde. Demgemäß wird über Leitung 101 Einsatzgasgemisch zugeführt und gelangt beispielsweise über Ventil 113 und Leitung 119 in einen ersten Teiladsorber 111 und danach weiter über Leitung 118 mit dem geöffneten Ventil ·115 in einen zweiten Teiladsorber 112, um schließlich als gereinigtes Gas über Leitung 110 und das geöffnete Ventil 116 an die Produktgasleitung 102 abgegeben zu werden. Weiterhin ist das Eintrittsende des ersten Teiladsorbers 111 über Leitung 119 und das Ventil 114 mit einer Restgasleitung 103 verbunden. Das Austrittsende des zweiten Teiladsorbers 112 ist über Leitung 110 und Ventil 117 mit einer Druckausgleichsleitung 104 verbunden. Die Leitung 104 ist ihrerseits auch über Ventil 107 mit der Produktgasleitung 102 verbunden. In entsprechender Weise sind auch alle anderen Adsorberpaare mit Ventilen versehen.

Darüber hinaus enthält die in Figur 4 dargestellte PSA-Anlage noch eine Druckausgleichsleitung 105, die über Ventile 211, 221, 231, 241, 251 und 261 mit den Austrittsenden der ersten Teiladsorber verbunden ist und als Druckausgleichsleitung für einen Druckausgleich zwischen ersten Teiladsorbern bei geschlossenem Ventil 115, 125, 135, 145, 155 bzw. 165 dient. Die Leitung 105 kann außerdem zum Gleichstromdruckausgleich während einer gemeinsamen Druckausgleichsphase herangezogen werden, falls der Druckausgleich nicht nur über die Austrittsenden der zweiten Teiladsorber, sondern parallel dazu auch über die Austrittsenden der ersten Teiladsorber erfolgen soll. Weiterhin weist die in Figur 4 dargestellte PSA-Anlage noch eine die Austrittsenden der zweiten Teiladsorber verbindende Leitung 106 auf, die mit Ventilen 212, 222, 232, 242, 252 und 262 mit den Leitungen 110, 120, 130, 140, 150 bzw. 160 verbunden ist. Diese Leitung kann für einen weiteren Druckausgleich herangezogen werden.

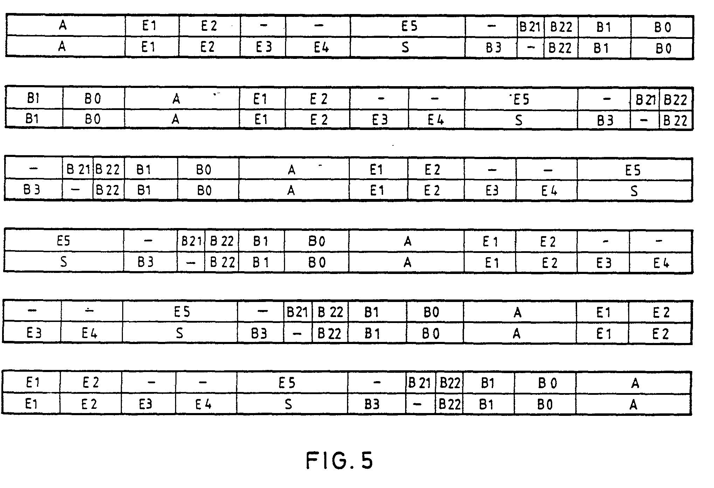

Die Betriebsweise der in Figur 4 dargestellten PSA-Anlage läßt sich am einfachsten anhand des in Figur 5 dargestellten Taktschemas beschreiben. Der erste, aus den Teiladsorbern 111 und 112 bestehende Adsorber durchläuft bei geöffneten Ventilen 113, 115 und 116 eine Adsorptionsphase A, während der Produktgas bzw. angereichertes Gas über Leitung 102 abgeführt wird. Nach Beendigung einer Adsorptionsphase werden die Ventile 113 und 116 geschlossen und eine Gleichstromentspannungsphase E1 mit einem aufzudrückenden Adsorber, der dann eine Phase B1 durchläuft, eingeleitet. Hierzu wird bei weiter geöffnetem Ventil 115 das Ventil 117 geöffnet, so daß Gleichstromentspannungsgas über Leitung 104 abgeführt und über das geöffnete Ventil 137 und Leitung 130 an das Austrittsende des zweiten Teiladsorbers 132 des dritten Adsorberpaares gegeben wird. Das Gleichstromentspannungsgas tritt über das ebenfalls geöffnete Ventil 135 auch in den ersten Teiladsorber 131 des dritten Adsorberpaares ein und drückt auch diesen auf einen Zwischendruck auf. Nach Beendigung des Druckausgleichs erfolgt eine weitere Gleichstromentspannungsphase E2 mit dem vierten Adsorberpaar 141, 142. Der Adsorber 141, der bereits auf einem Zwischendruck im Druckausgleich mit einem anderen ersten Teiladsorber auf einen Zwischendruck aufgedrückt wurde, wird zunächst vom Druckausgleich ausgeschlossen, d. h. das Ventil 145 bleibt zunächst geschlossen. Gleichstromentspannungsgas aus dem ersten Teiladsorberpaar gelangt über Leitung 110, das geöffnete Ventil 212, Leitung 106 und das geöffnete Ventil 242 über Leitung 140 ans Austrittsende des zweiten Teiladsorbers 142 und bringt diesen auf einen erhöhten Druck. Der Druck in den Teiladsorbern 142 und 141 wird über einen Drucktransmitter 243 bzw. 244 gemessen und die Druckwerte werden laufend an ein Programmsteuerwerk übermittelt. Sobald die von den Drucktransmittern 243 und 244 an das Programmsteuerwerk übermittelten Signale einen gleichen Druck in beiden Adsorbern anzeigen oder sobald eine zulässige Mindestdruckdifferenz zwischen diesen beiden Teiladsorbern gemessen wurde, wird über das Programmsteuerwerk das Ventil 145 geöffnet und der Druckausgleich erfolgt nunmehr mit beiden aufzudrückenden Teiladsorbern 141 und 142.

Nach Beendigung des Druckausgleichs wird die Gleichstromentspannungsphase E2 abgeschlossen und das Verbindungsventil 115 zwischen dem ersten und zweiten Teiladsorber geschlossen. Während der Teiladsorber 112 auf dem nach dem Ende der Gleichstromentspannung erreichten Druckniveau verweilt, wird der erste Teiladsorber 111 weiter im Gleichstrom entspannt. Während der Entspannungsphase E3 erfolgt ein Druckausgleich mit dem ersten Teiladsorber 151 der fünften Adsorbergruppe, der nach Beendigung einer Spülphase einen ersten Druckaufbau B3 durchläuft. Hierzu wird über das geöffnete Ventil 211 und Leitung 105 Gleichstromentspannungsgas durch das ebenfalls geöffnete Ventil 251 in das Austrittsende des ersten Teiladsorbers eingeleitet. Nach Beendigung dieser Druckausgleichsphase wird Ventil 211 geschlossen und die weitere Entspannung des Teiladsorbers 111 erfolgt im Gegenstrom zur Strömungsrichtung während einer Adsorptionsphase bei geöffnetem Ventil 114. Das mit desorbierenden Komponenten angereicherte Restgas tritt damit über Leitung 119 aus und wird über Leitung 103 abgeführt. Nachdem der erste Teiladsorber 111 seinen niedrigsten Verfahrensdruck am Ende der Gegenstromentspannungsphase E4 erreicht hat, wird er mit Gegenstromentspannungsgas aus dem zweiten Teiladsorber gespült. Hierzu wird das Ventil 115 langsam geöffnet, wobei die Öffnung des Ventils vom Programmsteuerwerk in Abhängigkeit des vom Drucktransmitter 213 gemessenen Drucks im zweiten Teiladsorber 112 geregelt wird. Das mit desorbierten Komponenten beladene Restgas tritt weiterhin über Leitung 119 und das geöffnete Ventil 114 in die Restgasleitung 103 ein.

Nach Beendigung der Gegenstromentspannungsphase E5 des zweiten Teiladsorbers 112 bzw. der parallel dazu verlaufenden Spülphase S des ersten Teiladsorbers 111 wird das Ventil 115 wieder geschlossen und der erste Teiladsorber 111 im Druckausgleich mit dem ersten Teiladsorber 131 des dritten Adsorberpaares auf einen ersten Zwischendruck aufgedrückt. Dies erfolgt über die geöffneten Ventile 231 und 211 sowie über Leitung 105. Das Ventil 114 am Eintrittsende des ersten Teiladsorbers 111 ist während dieser Phase selbstverständlich geschlossen. Nach erfolgtem erstem Druckausgleich während der Phase B3 schließt sich ein weiterer Druckaufbau im Druckausgleich mit dem vierten Adsorberpaar, das dann seine Gleichstromentspannungsphase aus E2 durchläuft, an. Wegen des unterschiedlichen Druckniveaus in den Teiladsorbern 111 und 112 wird dabei zunächst Gleichstromentspannungsgas über das geöffnete Ventil 242 und Leitung 106 sowie das geöffnete Ventil 212 und Leitung 110 ans Austrittsende des zweiten Teiladsorbers 112 geleitet, bis der Druck im Teiladsorber 112 den Druck des Teiladsorbers 111 erreicht hat. Wenn dies der Fall ist, was mittels der Drucktransmitter 213, 214 vom Programmsteuerwerk überwacht wird, öffnet das Ventil 115. Die Druckaufbauphase B21, während der nur der zweite Teiladsorber 112 aufgedrückt wurde, ist damit beendet, und die anschließende Druckaufbauphase B22 stellt einen Druckausgleich zwischen den jeweils zusammengeschalteten Adsorbergruppen der vierten und ersten Adsorber dar. Nach erfolgtem Druckausgleich schließt sich eine weitere Druckaufbauphase B1 an, die im Druckausgleich mit einem eine erste Gleichstromentspannungsphase E1 durchlaufenden Adsorberpaar stattfindet. Dies ist, wie aus Figur 5 hervorgeht, das fünfte Adsorberpaar, so daß Gleichstromentspannungsgas

über Leitung 150 und das geöffnete Ventil 157 durch Leitung 104 zum geöffneten Ventil 117 und weiter über Leitung 110 ans Austrittsende des zweiten Teiladsorbers 112 geführt wird, von dem aus es über das weiterhin geöffnete Ventil 115 auch in den ersten Teiladsorber 111 strömt. Nach Beendigung dieser Gleichstromentspannungsphase wird das Ventil 157 geschlossen und bei weiterhin geöffnetem Ventil 117 Produktgas aus der Produktgasleitung 102 über das dann geöffnete Ventil 107 zum weiteren Druckaufbau auf Adsorptionsdruck eingeleitet.

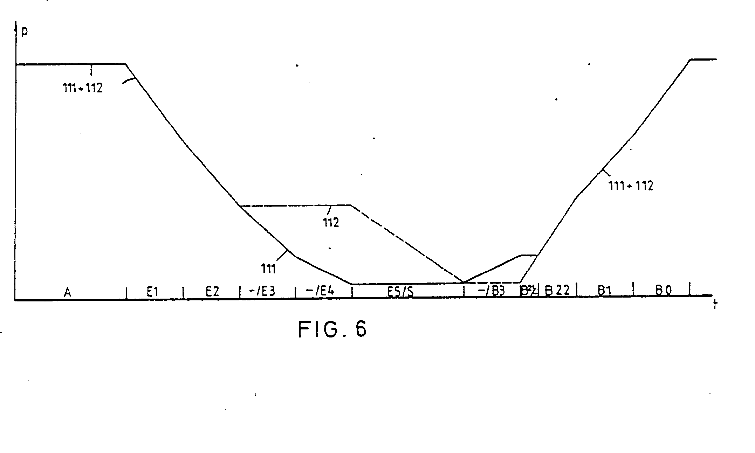

In Figur 6 ist in Analogie zu Figur 3 der Druckverlauf innerhalb eines Adsorberpaares während eines Schaltzyklus dargestellt.

**Patentansprüche**

1. Druckwechsel-Adsorptionsverfahren zum selektiven Adsorbieren mindestens einer Gaskomponente aus einem Einsatzgasgemisch, bei dem das Gasgemisch im zyklischen Wechsel durch mindestens drei Adsorber geführt wird, die gegeneinander versetzt Schaltzyklen durchlaufen, bei denen Einsatzgasgemisch während einer Adsorptionsphase bei erhöhtem Druck in einen Adsorber eingeleitet und nicht adsorbiertes Gas aus dem Adsorber abgezogen wird, nach Beendigung einer Adsorptionsphase eine partielle Entspannung im Gleichstrom erfolgt und dabei anfallendes Gleichstromentspannungsgas mindestens teilweise anderen Adsorbern zum partiellen Wiederaufdrücken zugeführt wird, nach Beendigung der Gleichstromentspannung eine Gegenstromentspannung und beim niedrigsten Verfahrensdruck gegebenenfalls eine Spülung mit einem Spülgas erfolgt und der Adsorber anschließend wieder auf den Adsorptionsdruck aufgedrückt wird, dadurch gekennzeichnet, daß das Einsatzgasgemisch während einer Adsorptionsphase durch jeweils zwei hintereinander geschaltete Teiladsorber geleitet wird, daß nach Beendigung mindestens einer Gleichstromentspannungsphase die Teiladsorber voneinander getrennt und der erste, vom Einsatzgasgemisch zuerst durchströmte Teiladsorber weiter entspannt wird, während der zweite Teiladsorber auf einem höheren Druck gehalten wird, danach der zweite Teiladsorber im Gegenstrom entspannt und dabei abgezogenes Gegenstromentspannungsgas zur Spülung des ersten Teiladsorbers verwendet wird.

2. Verfahren nach Anspruch 1, dadurch gekennzeichnet, daß die weitere Entspannung des ersten Teiladsorbers nach seiner Abtrennung mindestens teilweise im Gegenstrom erfolgt.

3. Verfahren nach Anspruch 1 oder 2, dadurch gekennzeichnet, daß der zweite Teiladsorber während der weiteren Entspannung des ersten Teiladsorbers im wesentlichen auf den Enddruck der gemeinsamen Gleichstromentspannung verbleibt.

4. Verfahren nach einem der Ansprüche 1 bis 3, dadurch gekennzeichnet, daß das Gegenstromentspannungsgas aus dem zweiten Teiladsorber mittels eines Regelventils auf den Druck des ersten Teiladsorbers nach dessen weiterer Entspannung entspannt wird, bevor es als Spülgas durch den ersten Teiladsorber geleitet wird.

5. Verfahren nach Anspruch 4, dadurch gekennzeichnet, daß während der Gegenstromentspannungsphase eines zweiten Teiladsorbers der Druck des zweiten Teiladsorbers laufend gemessen und mit einem vorgegebenen Solldruck verglichen wird, und danach die Öffnung des Regelventils eingestellt wird.

6. Verfahren nach einem der Ansprüche 1 bis 5, dadurch gekennzeichnet, daß der Druck des Einsatzgasgemisches zwischen 10 und 100 bar, vorzugsweise zwischen 20 und 100 bar, insbesondere zwischen 30 und 90 bar liegt.

7. Verfahren nach einem der Ansprüche 1 bis 6, dadurch gekennzeichnet, daß die gemeinsame Gleichstromentspannung beider Teiladsorber bis zu einem Druck durchgeführt wird, der dem 0,5- bis 1,0-fachen, vorzugsweise dem 0,7- bis 0,8-fachen des Partialdruckes der adsorbierbaren Komponente entspricht.

8. Verfahren nach einem der Ansprüche 1 bis 7, dadurch gekennzeichnet, daß der zweite Teiladsorber nur durch Entspannung regeneriert wird, falls der Partialdruck der im zweiten Teiladsorber adsorbierten Komponente mindestens doppelt so hoch ist, wie der tiefste Entspannungsdruck.

9. Verfahren nach einem der Ansprüche 1 bis 8, dadurch gekennzeichnet, daß der tiefste Entspannungsdruck in beiden Teiladsorbern im wesentlichen gleich ist.

10. Verfahren nach einem der Ansprüche 1 bis 9, dadurch gekennzeichnet, daß das Einsatzgasgemisch mindestens 30 Mol-% adsorbierbare Komponenten enthält.

11. Verfahren nach einem der Ansprüche 1 bis 10, dadurch gekennzeichnet, daß das Einsatzgasgemisch mindestens drei unterschiedlich stark adsorbierbare Komponenten enthält und die Teiladsorber so aufgeteilt sind, daß am Ende einer Adsorptionsphase im ersten Teiladsorber im wesentlichen nur die am stärksten adsorbierbare Komponente und im zweiten Teiladsorber im wesentlichen nur die schwächer adsorbierbare Komponente adsorbiert ist, während die am schwächsten adsorbierbare Komponente in reiner oder angereicherter Form aus dem zweiten Adsorber abgezogen wird.

12. Verfahren nach Anspruch 11, dadurch gekennzeichnet, daß der erste Teiladsorber während seiner weiteren Entspannung zunächst im Gleichstrom entspannt wird und dabei anfallendes Gleichstromentspannungsgas einem anderen ersten Teiladsorber zum Wiederaufdrücken im Druckausgleich zugeführt wird.

13. Verfahren nach Anspruch 11 oder 12, dadurch gekennzeichnet, daß die gemeinsame Gleichstromentspannung beider Teiladsorber bis zu einem Druck durchgeführt wird, der dem 0,5- bis 1,0-fachen, vorzugsweise dem 0,7- bis 0,8-fachen des Partialdrucks derjenigen der stärker oder am stärksten adsorbierbaren Komponenten entspricht, die in höherer Konzentration im Einsatzgasgemisch vorliegt.

14. Verfahren nach Anspruch 12, dadurch gekennzeichnet, daß ein Druckausgleich mit einem eine Gleichstromentspannungsphase durchlaufenden anderen, miteinander verbundenen ersten und zweiten Teiladsorberpaar dadurch eingeleitet wird, daß das Gleichstromentspannungsgas zunächst nur dem zweiten Teiladsorber zugeführt wird, bis dessen Druck im wesentlichen dem Druck des ersten Teiladsorbers entspricht, den dieser nach dem Druckausgleich mit einem anderen ersten Teiladsorber erreicht hat, und daß danach beide Teiladsorber miteinander verbunden und gemeinsam weiter aufgedrückt werden.

15. Verfahren nach Anspruch 14, dadurch gekennzeichnet, daß die Verbindung der beiden aufzudrückenden Teiladsorber durch eine mit einer Programmsteuerung verbundene, jedem Teiladsorber zugeordnete Drucküberwachung gesteuert wird.

16. Verfahren nach Anspruch 12, dadurch gekennzeichnet, daß das während der Gleichstromentspannung eines ersten Teiladsorbers gewonnenes Gleichstromentspannungsgas einem anderen ersten und zweiten Teiladsorber zum Wiederaufdrücken im Druckausgleich zugeführt wird.

17. Verfahren nach einem der Ansprüche 1 bis 16, dadurch gekennzeichnet, daß während der Gleichstromentspannung der hintereinander geschalteten Teiladsorber Gleichstromentspannungsgas vom Austrittsende des ersten und des zweiten Teiladsorbers abgezogen und jeweils den ersten bzw. zweiten Teiladsorbern eines anderen Teiladsorberpaares zugeführt werden.

18. Verfahren nach einem der Ansprüche 11 bis 17, dadurch gekennzeichnet, daß das Einsatzgasgemisch im wesentlichen aus Kohlendioxid sowie Wasserstoff und Stickstoff in einem Verhältnis unter 3 : 1 besteht und durch Adsorption des Kohlendioxids sowie Teiladsorption des Stickstoffs ein Wasserstoff- und Stickstoffverhältnis von 3 : 1 enthaltendes kohlendioxidfreies Gasgemisch gewonnen wird.

19. Vorrichtung zur Durchführung des Verfahrens nach einem der Ansprüche 1 bis 18 mit mindestens drei Adsorbern, die jeweils mittels Ventilen an eine Einsatzgaszuführungsleitung, eine Abzugsleitung für nicht adsorbiertes Gas, eine Restgasleitung und mindestens eine Druckausgleichsleitung angeschlossen sind und mit einem Programmsteuerwerk für die Schaltung der Ventile, dadurch gekennzeichnet, daß jeder Adsorber in zwei hintereinander geschaltete Teiladsorber unterteilt ist und zwischen den beiden Teiladsorbern ein Regelventil angeordnet ist, dessen Stellung vom Programmsteuerwerk in Abhängigkeit vom Signal eines dem zweiten Teiladsorber zugeordneten Drucktransmitters gesteuert wird.

20. Vorrichtung nach Anspruch 19, dadurch gekennzeichnet, daß jedem Teiladsorber ein Drucktransmitter zugeordnet ist.

## Claims

1. A pressure swing adsorption process for the selective adsorption of at least one gaseous component from an input gas mixture in which the gas mixture is conducted in cyclic alternation through at least three adsorbers which, in staggered fashion, undergo switching cycles in which during an adsorption phase input gas mixture is introduced into an adsorber at increased pressure and unadsorbed gas is withdrawn from the adsorber, at the end of an adsorption phase a partial expansion takes place in cocurrent flow and cocurrent flow expansion gas thereby produced is supplied at least in part to other adsorbers for a partial re-pressurisation, at the end of the cocurrent flow expansion a counter-flow expansion takes place and at the lowest process pressure flushing with a flushing gas takes place, whereupon the adsorber pressure is again increased to the adsorption pressure, characterised in that during an adsorption phase, the input gas mixture is in each case led through two series-connected sub-adsorbers, that at the end of at least one cocurrent flow expansion phase the sub-adsorbers are separated from one another and the first sub-adsorber, which was the first to be traversed by the input gas mixture, is further expanded whilst the second sub-adsorber is maintained at a higher pressure, whereupon the second sub-adsorber is expanded in counter-flow and counter-flow expansion gas thereby discharged is used to flush the first sub-adsorber.

2. A process as claimed in Claim 1, characterised in that the further expansion of the first sub-adsorber takes place after its separation at least partially in counter-flow.

3. A process as claimed in Claim 1 or 2, characterised in that during the further expansion of the first sub-adsorber, the second sub-adsorber essentially remains at the final pressure of the common cocurrent flow expansion.

4. A process as claimed in one of Claims 1 to 3, characterised in that the counter-flow expansion gas from the second sub-adsorber is expanded by means of a regulating valve to the pressure of the first sub-adsorber after the further expansion of the latter, before it is led through the first sub-adsorber as flushing gas.

5. A process as claimed in Claim 4, characterised in that during the counter-flow expansion phase of a second sub-adsorber, the pressure of the second sub-adsorber is continuously measured and compared with a predetermined theoretical pressure, whereupon the opening of the regulating valve is adjusted.

6. A process as claimed in one of Claims 1 to 5, characterised in that the pressure of the input gas mixture is between 10 and 100 bar, chiefly between 20 and 100 bar, and in particular between 30 and 90 bar.

7. A process as claimed in one of Claims 1 to 6, characterised in that the common cocurrent flow expansion, of the two sub-adsorbers is carried out to a pressure which corresponds to 0.5 to 1.0-times, particularly 0.7 to 0.8-times the partial pressure of the adsorbable component.

8. A process as claimed in one of Claims 1 to 7, characterised in that the second sub-adsorber is only regenerated by expansion if the partial pressure of the component adsorbed in the second sub-adsorber is at least double the lowest expansion pressure.

9. A process as claimed in one of Claims 1 to 8, characterised in that the lowest expansion pressure in the two sub-adsorbers is substantially equal.

10. A process as claimed in one of Claims 1 to 9, characterised in that the input gas mixture contains at least 30 mol% adsorbable components.

11. A process as claimed in one of Claims 1 to 10, characterised in that the input gas mixture contains at least three components which can be adsorbed to different extents and the sub-adsorbers are divided in such manner that at the end of an adsorption phase fundamentally only the component which can be adsorbed to the strongest extent is adsorbed in the first sub-adsorber and fundamentally only the component which can be ·adsorbed to a weaker extent is adsorbed in the second sub-adsorber, whilst the component which can be adsorbed to the weakest extent is discharged from the second adsorber in pure or enriched form.

12. A process as claimed in Claim 11, characterised in that during its further expansion, the first sub-adsorber is initially expanded in cocurrent flow and cocurrent flow expansion gas thereby produced is fed to another first sub-adsorber in order to build up its pressure again by pressure equalisation.

13. A process as claimed in Claim 11 or 12, characterised in that the common cocurrent flow expansion of the two sub-adsorbers is carried out to a pressure which corresponds to 0.5 to 1.0-times, particularly 0.7 to 0.8-times the partial pressure of those components which can be adsorbed to a stronger extent or most strongly and which are present in a higher concentration in the input gas mixture.

14. A process as claimed in Claim 12, characterised in that a pressure equalisation with another pair of interconnected first and second sub-adsorbers undergoing a cocurrent flow expansion phase is initiated in that the cocurrent flow expansion gas is initially supplied only to the second sub-adsorber until its pressure essentially corresponds to the pressure of the first sub-adsorber reached by the latter after pressure equalisation with another first sub-adsorber, and that then the two sub-adsorbers are connected to one another and commonly further pressurised.

15. A process as claimed in Claim 14, characterised in that the connection between the two sub-adsorbers which are to be pressurised is controlled by a pressure monitoring unit which is connected to a programme control unit and which is assigned to each sub-adsorber.

16. A process as claimed in Claim 15, characterised in that the cocurrent flow expansion gas obtained during the cocurrent flow expansion of a first sub-adsorber is supplied to another first and second sub-adsorber in order to build up their pressure again by pressure equalisation.

17. A process as claimed in one of Claims 1 to 16, characterised in that during the cocurrent flow expansion of the series-connected sub-adsorbers, cocurrent flow expansion gas is discharged from the output end of the first and second sub-adsorbers and fed to the first and second sub-adsorbers respectively of another pair of sub-adsorbers.

18. A process as claimed in one of Claims 11 to 17, characterised in that the input gas mixture consists essentially of carbon dioxide and of hydrogen and nitrogen in a ratio of 3 :1 and by adsorption of the carbon dioxide and partial adsorption of the nitrogen, a carbon dioxide-free gas mixture is obtained which has a hydrogen/nitrogen ratio of 3 : 1.

19. Apparatus for carrying out the process claimed in one of Claims 1 to 18 comprising at least three adsorbers, each of which is connected by valves to an input gas supply line, a discharge line for unadsorbed gas, a residual gas line and at least one pressure equalisation line, and a programme control unit for the switching of the valves, characterised in that each adsorber is subdivided into two series-connected sub-adsorbers and between the two sub-adsorbers there is arranged a regulating valve the position of which is controlled by the programme control unit in dependence upon the signal from a pressure transmitter assigned to the second sub-adsorber.

20. A device as claimed in Claim 19, characterised in that a pressure transmitter is assigned to each sub-adsorber.

**Revendications**

1. Procédé d'adsorption sous pressions alternées destiné à l'adsorption sélective d'au moins un composant d'un mélange de gaz à épurer, dans lequel le mélange de gaz traverse au moins trois adsorbeurs à fonctionnement cyclique séquentiel, procédé dans lequel le mélange de gaz à épurer est introduit selon une première direction d'écoulement dans un adsorbeur pendant une phase d'adsorption sous pression élevée et le gaz non adsorbé est extrait de cet adsorbeur, dans lequel après achèvement d'une phase d'adsorption est effectuée une détente partielle selon la première direction d'écoulement et le gaz détendu est au moins partiellement amené à d'autres adsorbeurs pour y assurer une montée en pression partielle, dans lequel après la détente selon la première direction d'écoulement sont effectués une détente à contrecourant et, le cas échéant, à la pression minimale du cycle, un balayage avec du gaz de balayage et dans lequel enfin l'adsorbeur est ramené à la pression d'adsorption, caractérisé en ce que le mélange de gaz à épurer est passé dans deux adsorbeurs partiels reliés en série, en ce qu'après achèvement d'au moins une phase de détente selon la première direction d'écoulement les adsorbeurs partiels sont isolés l'un par rapport à l'autre et le premier adsorbeur, traversé en premier par le mélange de gaz à épurer, continue à être détendu tandis que le second adsorbeur partiel est maintenu à un niveau de pression plus élevé, et en ce que enfin le second adsorbeur partiel est soumis à une détente selon une direction contraire à la première direction précitée donc dite à contrecourant et le gaz détendu à contrecourant ainsi extrait est utilisé pour le balayage du premier adsorbeur partiel.

2. Procédé selon la revendication 1, caractérisé en ce que la détente du premier adsorbeur partiel après son isolement se poursuit au moins partiellement à contrecourant.

3. Procédé selon la revendication 1 ou 2, caractérisé en ce que pendant que se poursuit la détente du premier adsorbeur partiel, la pression dans le second adsorbeur partiel est pratiquement maintenue à la pression finale de la détente commune effectuée selon la première direction d'écoulement.

4. Procédé selon l'une des revendications 1 à 3, caractérisé en ce que le gaz détendu à contrecourant provenant du second adsorbeur partiel est détendu à la pression du premier adsorbeur partiel après la fin de la détente de ce dernier au moyen d'une vanne de régulation, avant d'être amené au premier adsorbeur partiel comme gaz de balayage.

5. Procédé selon la revendication 4, caractérisé en ce que pendant la phase de détente à contrecourant d'un second adsorbeur partiel, la pression dans le second adsorbeur partiel est constamment mesurée et comparée avec une pression de consigne prédéterminée, l'ouverture de la vanne de régulation étant commandée sur cette base.

6. Procédé selon l'une des revendications 1 à 5, caractérisé en ce que la pression du mélange de gaz à épurer est comprise entre 10 et 100 bar, de préférence entre 20 et 100 bar, et plus particulièrement entre 30 et 90 bar.

7. Procédé selon l'une des revendications 1 à 6, caractérisé en ce que la détente commune selon la première direction d'écoulement des deux adsorbeurs partiels est exécutée jusqu'à une pression correspondante à 0,5 à 1,0 fois, de préférence 0,7 à 0,8 fois la pression partielle du constituant adsorbable contenu dans le mélange de gaz.

8. Procédé selon l'une des revendications 1 à 7, caractérisé en ce que le second adsorbeur partiel n'est régénéré par détente que lorsque la pression partielle du constituant adsorbé dans le second adsorbeur partiel est d'au moins deux fois la pression de détente minimale.

9. Procédé selon l'une des revendications 1 à 8, caractérisé en ce que la pression de détente minimale est identique dans les deux adsorbeurs partiels.

10. Procédé selon l'une des revendications 1 à 9, caractérisé en ce que le mélange de gaz à épurer contient au moins 30 mol% du constituant à adsorber.

11. Procédé selon l'une des revendications 1 à 10, caractérisé en ce que le mélange de gaz à épurer comporte au moins trois constituants différemment adsorbable et en ce que les adsorbeurs partiels sont disposés de manière que, à la fin d'une phase d'adsorption, le constituant le plus adsorbable ne soit pratiquement adsorbé que dans le premier adsorbeur partiel, et que le constituant moins adsorbable ne soit adsorbé pratiquement que dans le second adsorbeur partiel, tandis que le constituant le moins adsorbable ou non-adsorbable est retiré du second adsorbeur partiel à l'état pur ou sous une forme enrichie.

12. Procédé selon la revendication 11, caractérisé en ce que le premier adsorbeur partiel poursuit sa détente d'abord selon la première direction d'écoulement, le gaz détendu obtenu étant amené à un autre premier adsorbeur partiel pour le repressuriser ou remettre sous pression par égalisation ou équilibre de pression.

13. Procédé selon l'une des revendications 11 ou 12, caractérisé en ce que la détente commune selon la première direction d'écoulement des deux adsorbeurs partiels se poursuit jusqu'à une pression correspondant à 0,5 à 1,0 fois, de préférence 0,7 à 0,8 fois la pression partielle de celui des constituants qui est plus ou le plus adsorbables, présentant en plus la concentration la plus élevée dans le mélange de gaz à épurer.

14. Procédé selon la revendication 12, caractérisé en ce que l'égalisation ou équilibre de pression d'une autre paire de premier et second adsorbeurs reliés entre eux et qui sont en phase de détente selon la première direction d'écoulement, soit réalisé par amenée du gaz détendu selon la première direction d'écoulement d'abord uniquement au second adsorbeur partiel jusqu'à ce que ce dernier atteigne pratiquement la pression du premier adsorbeur partiel obtenue par égalisation ou équilibre de pression avec un autre adsorbeur partiel, et en ce qu'ensuite, les deux adsorbeurs partiels sont reliés et leur pression simultanément remontée.

15. Procédé selon la revendication 14, caractérisé en ce que la liaison des deux adsorbeurs partiels à remettre sous pression est commandée par un détecteur de pression relié à un contrôleur de séquence associé à chaque adsorbeur partiel.

16. Procédé selon la revendication 12, caractérisé en ce que le gaz détendu selon la première direction d'écoulement sortant, lors de la phase de détente selon la première direction d'écoulement, d'un premier adsorbeur partiel est amené à une autre paire de premier et second adsorbeurs pour les remettre sous pression par égalisation ou équilibre de pression.

17. Procédé selon l'une des revendications 1 à 16, caractérisé en ce que le gaz détendu selon la première direction d'écoulement est retiré à la sortie du premier et du second adsorbeur partiel et amené au premier et second adsorbeur partiel d'une autre paire d'adsorbeurs partiels pendant la phase de détente selon la première direction d'écoulement des adsorbeurs partiels reliés en série.

18. Procédé selon l'une des revendications 11 à 17, caractérisé en ce que le mélange de gaz à épurer contient essentiellement du dioxyde du carbone, et de l'hydrogène et de l'azote en un rapport inférieur à 3 :1 et en ce que après adsorption du dioxyde de carbone et adsorption partielle de l'azote, le mélange de gaz présente un rapport hydrogène/azote de 3 :1 et est dépourvu de gaz carbonique.

19. Dispositif pour la mise en oeuvre du procédé selon l'une des revendications 1 à 18 comportant au moins trois adsorbeurs reliés chacun par des vannes à une conduite de gaz à épurer, une conduite pour le gaz non adsorbé, une conduite de gaz résiduaire et au moins une conduite d'égalisation ou équilibre de pression et comportant un contrôleur de séquence pour le fonctionnement des vannes, caractérisé en ce que chaque adsorbeur est subdivisé en deux adsorbeurs partiels reliés en série et qu'entre les deux adsorbeurs partiels est disposée une vanne de régulation commandée par le contrôleur de séquences en fonction d'un signal provenant du détecteur de pression associée au second adsorbeur partiel.

20. Dispositif selon la revendication 19, caractérisé en ce qu'à chaque adsorbeur partiel est associé un détecteur de pression.

FIG.1

| A | E1 | — | E3 | B1 | B0 |
|---|----|----|----|----|----|
| A | E1 | E2 | S | B1 | B0 |

| | | | | | | |
|---|---|---|---|---|---|---|
| 12 | B1 | B0 | A | E1 | — | E3 |
| 21 | B1 | B0 | A | E1 | E | S |

| | | | | | |
|---|---|---|---|---|---|
| 32 | E1 | — | E3 | B1 | B0 | A |
| 31 | E1 | E2 | S | B1 | B0 | A |

FIG.2

1

FIG.3

FIG.4

| A | | E1 | E2 | - | - | E5 | | - | B21 | B22 | B1 | B0 |
|---|---|----|----|---|---|----|---|---|-----|-----|----|----|
| A | | E1 | E2 | E3 | E4 | S | | B3 | - | B22 | B1 | B0 |

| B1 | B0 | A | | E1 | E2 | - | - | E5 | | - | B21 | B22 |
|----|----|---|---|----|----|---|---|----|---|---|-----|-----|
| B1 | B0 | A | | E1 | E2 | E3 | E4 | S | | B3 | - | B22 |

| - | B21 | B22 | B1 | B0 | A | | E1 | E2 | - | - | E5 | |
|---|-----|-----|----|----|---|---|----|----|---|---|----|---|
| B3 | - | B22 | B1 | B0 | A | | E1 | E2 | E3 | E4 | S | |

| E5 | | - | B21 | B22 | B1 | B0 | A | | E1 | E2 | - | - |
|----|---|---|-----|-----|----|----|---|---|----|----|---|---|
| S | | B3 | - | B22 | B1 | B0 | A | | E1 | E2 | E3 | E4 |

| - | - | E5 | | - | B21 | B22 | B1 | B0 | A | | E1 | E2 |
|---|---|----|---|---|-----|-----|----|----|---|---|----|----|
| E3 | E4 | S | | B3 | - | B22 | B1 | B0 | A | | E1 | E2 |

| E1 | E2 | - | - | E5 | | - | B21 | B22 | B1 | B0 | A | |
|----|----|---|---|----|---|---|-----|-----|----|----|---|---|
| E1 | E2 | E3 | E4 | S | | B3 | - | B22 | B1 | B0 | A | |

FIG.5

4

FIG. 6